# EUROPEAN PATENT APPLICATION

(11) **EP 1 734 147 A1**
(43) Date of publication of application: **20.12.2006**
(21) Application number: 05727135.5
(22) Date of filing: 25.03.2005
(51) Int. Cl.: C23C 8/28, B23K 3/06, C21D 1/06, H05K 3/34

(54) **PROCESS FOR PRODUCING AUSTENITE STAINLESS STEEL, SOLDER MELTING VESSEL AND AUTOSOLDERING APPARATUS**

(30) Priority: 26.03.2004 JP 2004093709
(71) Applicant: SONY CORPORATION, Tokyo 141-0001 (JP); Tamura Corporation, Tokyo 178-8511 (JP); Tamura Fa System Corporation, Sayama-shi Saitama 3501300 (JP); Kyokuto Nitriding Co., Ltd., Hadano-shi Kanagawa 2591303 (JP)
(72) Inventor: SAITO, Takashi, SONY CORPORATION, Tokyo 1410001 (JP); MIZUMURA, Kaoru, Hadano-shi, Kanagawa 2591303 (JP); OKANO, Teruo, TAMURA FA SYSTEM CORPORATION, Sayama-shi, Saitama 3501300 (JP); KEZUKA, Kozo, TAMURA FA SYSTEM CORPORATION, Sayama-shi, Saitama 3501300 (JP); IIJIMA, Masaki, TAMURA FA SYSTEM CORPORATION, Sayama-shi, Saitama 3501300 (JP); YOSHIDA, Shunichi, TAMURA FA SYSTEM CORPORATION, Sayama-shi, Saitama 3501300 (JP)
(74) Representative: Jackson, Jonathan Andrew
(86) International application number: PCT/JP2005/005538
(87) International publication number: WO 2005/093115

(57) **Abstract**

A passivation film including a nitride-reformed layer that excludes chromium nitride (CrN) is formed on a surface of an austenitic stainless steel. The passivation film composed of chromium oxide functions as protection film against lead-free solder. As a result, the surface of stainless steel is hard to be corroded even when it contacts with the lead-free solder in its melted solder, thereby improving its corrosion resistance and its wear resistance substantially. In a case of SUS316 stainless steel, on an outermost surface of which the passivation film is formed, a period of lapsed time until corrosion of the stainless steel starts extends to about 500 hours as line Le shown in Fig. 4, and its corrosion depth indicates shallower one (20 through 25 µm) as compared with the conventional one, thereby expecting that its durable year can be improved to an extent similar to that using a lead-filled solder, in order to obtain a stainless steel with enhanced corrosion resistance.

## Description

### TECHNICAL FIELD

The present invention relates to a method for manufacturing austenitic stainless steel that is preferable for use on member (part) directly contacting with melted metal or melted alloy such as lead-free solder, a solder-melting tank using this austenitic stainless steel, and a soldering apparatus using this solder-melting tank.

More specifically, the invention relates to a method for manufacturing the austenitic stainless steel and the like in which a passivation film having a nitride-reformed layer is formed on a surface of the austenitic stainless steel to suppress corrosion by lead-free solder, thereby enhancing corrosion resistance as comparing any conventional ones and extending a service life of the stainless steel.

### BACICGROUND ART

An automatic soldering apparatus is usually used when mounting various kinds of electronic components (IC chip, resistance, capacitor, etc.) on a printed circuit board or the like.

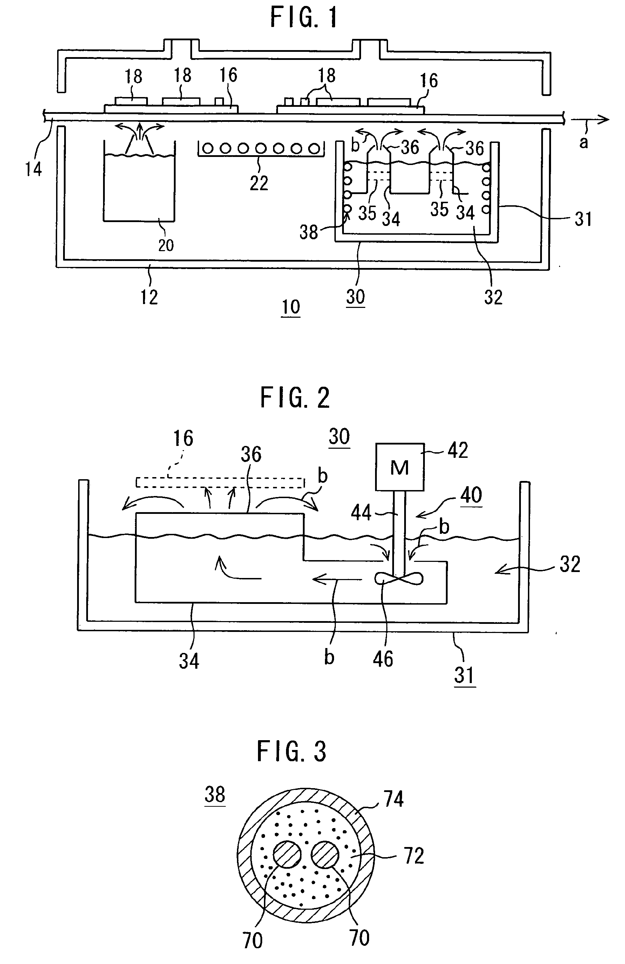

Fig. 1 is a conceptual diagram showing an example of such the automatic soldering apparatus 10. The automatic soldering apparatus 10 has a box-shaped casing 12, and a conveying belt 14, which is set at its upper side, passing therethrough from the left side to the right side (arrow "a") thereof. Printed circuit boards 16 each mounting a plurality of electronic components 18 are placed on the upper side of the conveying belt 14, and they run through the casing 12 at a conveying speed of the conveying belt 14.

At the lower side of the conveying belt 14, respectively, a box-shaped fluxer 20 is disposed in the casing 12 at its left side (printed circuit board delivery side), and a preheater 22 is disposed at the right side thereof. A solder-melting tank 30 is also provided at the right side of the preheater 22.

The solder-melting tank 30 is composed of a box-shaped solder bath 31, and an immersion type heater 38 provided in the solder bath 31.

The solder bath 31 is filled with lead-free solder liquid (melted solder) 32, and twin ducts 34, 34 are provided, in this example, at the upper opening side of the solder bath 31, across a specified distance, with them being immersed in the melted solder 32.

Nozzles 36, 36 are formed at the upper side of the ducts 34, 34, and the nozzles 36, 36 are so disposed as to be oppositely faced across a specified distance at the lower side of the conveying belt 14 with them being orthogonal to the conveying direction. The lead-free solder in the melted solder 32 is injected as indicated by arrow "b" through the nozzles 36, 36, and hits against the lower surface of each of the printed circuit boards 16 being conveyed, so that the mounted electronic components are soldered. In the solder bath 31, the immersion type heater 38 provided as to be immersed in the melted solder 32 controls temperature of the melted solder 32.

Fig. 2 is a view of the solder-melting tank 30 shown in Fig. 1 as seen from a side thereof in which a jet agitator 40 of melted solder 32 is provided at one end of a slender box-shaped duct 34. The jet agitator 40 is composed of a motor 42, a shaft (agitation rod) 44 coupled to the motor 42, and a jet agitation fin 46 coupled to a leading end thereof.

By rotating the motor 44, the jet agitation fin 46 is put in rotation, and the melted solder 32 is forced down to the arrow "b" side, and circulated by force inside and outside the ducts 34, 34. By this forced circulation, the melted solder 32 is injected from the nozzles 36, 36 to hit against the printed circuit boards 16, so that the electronic components 18 can be soldered automatically.

Fig. 3 shows an example of sectional structure of the immersion type heater 38. This immersion type heater 38 is formed so as to have a pair of nichrome wires 70 at its central part, an insulator 72 coating these nichrome wires 70, and austenitic stainless steel 74 coating the surface of the insulator 72.

By using the flow automatic soldering apparatus 10 shown in Fig. 1 that has the solder-melting tank 30 as shown in Fig. 2, general Sn-Ag-Cu system lead-free solder or Sn-Ag-Zn system lead-free solder is melted and when soldering various kinds of electronic components mounted on the printed circuit boards 16 by using the melted solder 32, such a phenomenon has occurred that accompanying with a lapsed period of used time thereof, component members of the automatic soldering apparatus 10, especially the component members of the solder-melting tank 30 directly contacting with the melted solder 32 are corroded.

In these component members such as the solder bath 31, the ducts 34, the nozzles 36 used in the ducts 34, the immersion type heater 38, the jet agitation fin 46, the agitation rod (motor shaft) 44, and a straightening plate 35 provided in each of the ducts 34, SUS304 and other austenitic stainless steel members have been used.

These stainless steel materials are members (parts) that always contact with the melted solder 32 and these stainless steel materials are mainly composed of chromium Cr, nickel Ni, manganese Mn, and iron Fe.

It has been found that when being used for a long period, these stainless steel materials are corroded by lead-free solder in the portion contacting with the lead-free solder, and that they cannot be used any longer if the corrosion progresses.

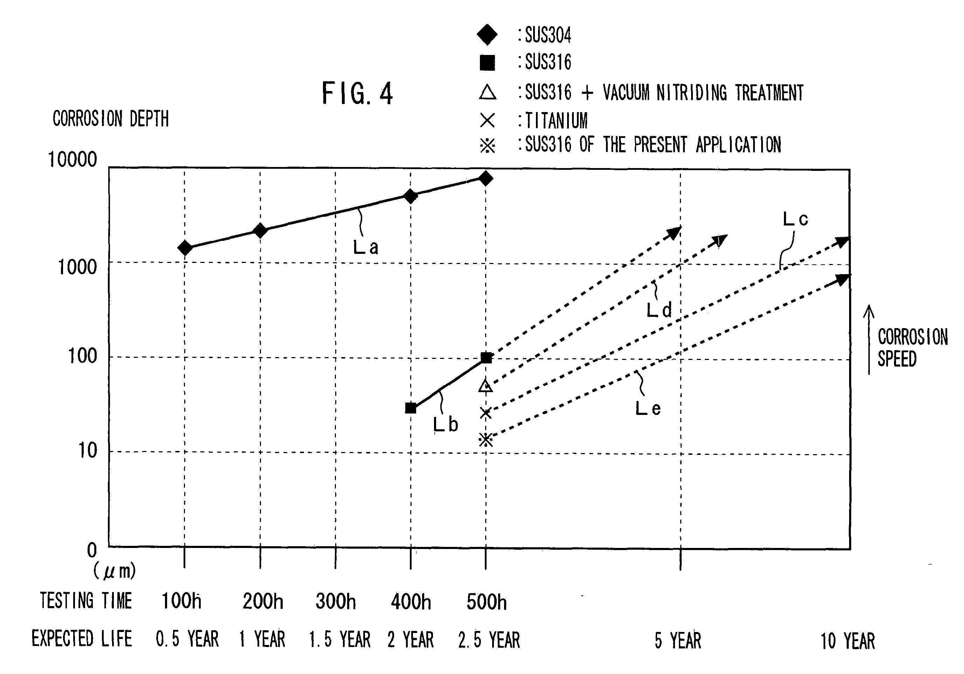

For example, in the case of SUS304 stainless steel, it has been found that corrosion starts at about 100 hours (100H) as indicated by straight line La in Fig. 4; the corroded portion expands in 400 hours; and multiple spots of corrosion appear. In about 500 hours, corrosions have further expanded and any new corrosions have been found. As a result, the service life thereof has been found to be several times shorter than that of the case of using lead-filled solder.

As the corrosion measure (countermeasure for corrosion) by the lead-free solder, it may be considered to treat the solder bath 31 by plating or the like by applying the technology disclosed in Patent Literature 1, Japanese Application Publication No. 2002-185118 but this process is not familiar with stainless steel as well as it is questionable whether the expected corrosion resistant effect may be obtained or not.

Hence, the countermeasures thereagainst may be considered as follow:
(1) SUS304 stainless steel is replaced with SUS316 stainless steel, which is also austenitic stainless steel.
(2) SUS304 stainless steel is replaced with a titanium material that is excellent in corrosion resistance. For use of titanium materials, see Patent Literature 2 (Japanese Patent Application Publication No. 2002-113570).
(3) Vacuum-nitriding treated SUS304 and the like are used.

Because the above alternative proposal (1) uses SUS316 stainless steel that is excellent in corrosion resistance as compared with that of SUS304 stainless steel, the corrosion starting time thereof is later than that of SUS304 stainless steel. For example, as shown in line Lb in Fig. 4, a lapsed period of the apparatus-working time until corrosion appears extends to about 400 hours.

However, after working up to about 400 hours, crater-like signs of corrosion appear, and the stainless steel is eroded completely in about 500 hours of operation, and is corroded. It is hence predicted that the life of stainless steel is shortened to nearly half of that of a conventional apparatus.

The alternative proposal (2) uses a titanium material that is also excellent in corrosion resistance. Use of titanium materials is described in the above-described Patent Literature 2. If a titanium material is used, as indicated by line Lc in FIG. 4, the lapsed period of working time until corrosion starts extends to about 500 hours. Therefore, this proposal is well applied as corrosion countermeasures.

However, the titanium material is expensive and the material cost is high, so that the product price is increased. Further, there is an issue where processing or welding of titanium material is difficult in the atmosphere, and it is considered not suited to be applied to automatic soldering apparatus.

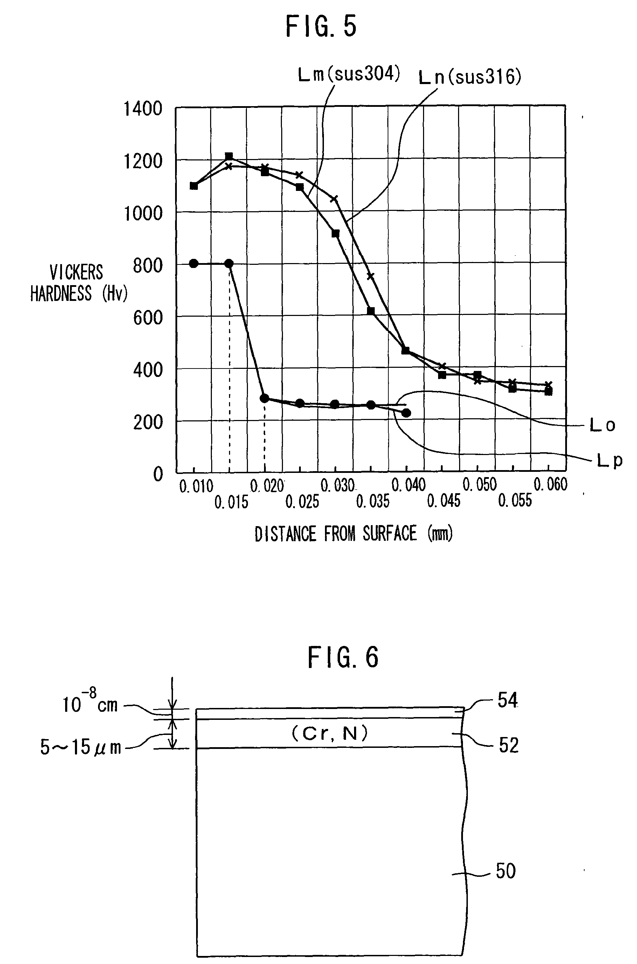

The alternative proposal (3) uses the existing stainless steel after vacuum-nitriding treatment is performed on it. By vacuum-nitriding treatment, a rigid layer of an extremely high hardness is formed on the surface of stainless steel. In Fig. 5, curve Lm is a hardness transition curve by vacuum-nitriding treatment of SUS304 stainless steel, and curve Ln is similarly a hardness transition curve by vacuum-nitriding treatment of SUS316 stainless steel.

Thus, by vacuum-nitriding treatment, a rigid layer of high hardness can be formed, and thus, it is hardly attacked by corrosion by lead-free solder. According to an experiment, by 400 hours of working, the whole surface was peeled off in a spotty fashion. In about 500 hours, however, any corrosion starts.

The vacuum-nitriding treated SUS316 stainless steel has the corrosion resistance as indicated by line Ld in Fig. 4, and has such a shortcoming that it is less likely to be corroded than the SUS316 stainless steel itself but is more likely to be corroded than the titanium material (line Lc).

Incidentally, it has been founded that as indicated by line Lc, the titanium material is corroded to a depth of about 50 µm in about 500 hours, but in the case of vacuum-nitriding treated SUS316 stainless steel, as indicated by line Ld, the depth of corrosion is progressed to about 70 to 80 µm. Accordingly, it is predicted that the life thereof is shorter than that of the titanium material.

Herein, it is to be noted that the vacuum-nitriding treatment is referred to as a nitriding treatment in vacuum at relatively high temperature (500 to 550 °C) in a relatively long treated time (40 to 50 hours).

### DISCLOSURE OF THE INVENTION

The present invention resolves these conventional issues, and proposes providing a manufacturing method of austenitic stainless steel such as SUS316 having a passivation film including nitride-reformed layer on the surface thereof, a solder-melting tank using this austenitic stainless steel, and an automatic soldering apparatus using this solder-melting tank, thereby significantly enhancing the corrosion resistance by using this stainless steel as the lead-free solder applicable member.

In order to solve these conventional issues, a method for manufacturing an austenitic stainless steel according to this invention claimed in claim 1 is characterized by including the steps of performing nitriding on the austenitic stainless steel for use on member directly contacting with melted metal and melted alloy at a heating temperature to form a nitride-reformed layer and a passivation film on the surface of the austenitic stainless steel, and forming a passivation film on an outermost surface of the stainless steel.

Further, a solder-melting tank according to this invention claimed in claim 8 is characterized in that the tank comprises a solder bath for melting and storing solder and an immersion type heater installed in the solder bath, and in that in the solder bath and the immersion type heater, respectively, austenitic stainless steel having a nitride-reformed layer and a passivation film is used on the surface thereof.

Additionally, an automatic soldering apparatus according to this invention claimed in claim 13, which comprises a conveying belt and a solder-melting tank, is characterized in that in the solder-melting tank, austenitic stainless steel having a nitride-reformed layer and a passivation film is used on the surface thereof.

According to the invention, the members of the parts directly contacting with the lead-free solder (melted lead-free solder) such as melted metal or melted alloy are made of an austenitic stainless steel, which has a nitride-reformed layer on the surface thereof. A passivation film is formed on the outermost layer of the stainless steel.

The nitride-reformed layer includes a solid solution of each of the chromium Cr and nitrogen N without existence of chromium nitride (CrN). This passivation film is a chromium oxide film. This passivation film is excellent in corrosion resistance, and if the solder used when mounting electronic components is a lead-free solder, corrosion into the austenitic stainless steel by this lead-free solder can be arrested.

As the lead-free solder, Sn-Ag-Cu system lead-free solder or Sn-Ag-Zn system lead-free solder as used in mounting of electronic components may be used as mentioned above.

According to an experiment, corrosion starts in about 500 hours of operation, but the corrosion depth thereof indicates about 20 to 30 µm, so that the corrosion resistance is thus improved as compared with the conventional ones such as SUS304 stainless steel, SUS316 stainless steel, vacuum-nitriding treated SUS316 stainless steel, or titanium material. As a result, it has been found that the life of stainless steel against the lead-free solder is extended.

It is thus possible to provide a solder-melting tank that is excellent in corrosion resistance and an automatic soldering apparatus equipped with this solder-melting tank, by using this stainless steel.

According to the invention, using the austenitic stainless steel forming a nitride-reformed layer and a passivation film on its surface allows to be provided the stainless steel with high corrosion resistance having the passivation film that is capable of preventing corrosion from the lead-free solder of melted metal or melted alloy.

According to the invention, by performing special nitriding on austenitic stainless steel, an austenitic stainless steel forming a nitride-reformed layer and a passivation film on its surface is obtained.

As a result, the passivation film prevents corrosion from lead-free solder, and it can withstand use for a long time.

Such the special nitriding is realized at lower temperature and in a shorter time than those in conventional nitriding, and the manufacturing cost of stainless steel can be lowered as compared with that of conventional one.

In the invention, since the austenitic stainless steel forming a nitride-reformed layer and a passivation film on its surface is used as the member of the solder-melting tank or the soldering apparatus, the solder-melting tank and the automatic soldering apparatus with excellent corrosion resistance and long life can be presented. As a result, the solder-melting tank and the automatic soldering apparatus contributing to suppression of manufacturing cost of product can be presented.

### BRIEF DESCRIPTION OF THE DRAWINGS

[FIG. 1] is a cross-sectional view of an automatic soldering apparatus;
[FIG. 2] is a side view of a solder-melting tank;
[FIG. 3] is a cross-sectional view of an immersion type heater used in the solder-melting tank;
[FIG. 4] is a characteristics graph showing characteristics of corrosion resistance of austenitic stainless steel related to the present invention;
[FIG. 5] is a characteristics graph showing Vickers hardness; and
[FIG. 6] is a schematic cross-sectional view of the austenitic stainless steel related to the present invention.

### BEST MODE FOR CARRYING OUT THE INVENTION

Referring now to the drawings, preferred embodiments of the invention will be described specifically below, including the manufacturing method of austenitic stainless steel, solder-melting tank using this austenitic stainless steel, and automatic soldering apparatus using this solder-melting tank.

The automatic soldering apparatus according to the invention, when applied in the automatic soldering apparatus 10 shown in Fig. 1, has the exactly same configuration as that shown in Fig. 1. The solder-melting tank 30 and the immersion type heater 38 may have the same configurations as those shown in Fig. 2 and Fig. 3, and their description will be thus omitted. Difference lies in the members for composing the automatic soldering apparatus 10 directly contacting with the melted solder.

In this invention, austenitic stainless steel is used as the members. In particular, the austenitic stainless steel forming a nitride-reformed layer and a passivation film on its surface is used as the austenitic stainless steel contacting with the melted solder. Therefore, the SUS316 stainless steel forming a nitride-reformed layer and a passivation film on its surface is used at least in the solder bath 31, the duct 34, the nozzle 36, the shaft 44 as the jet agitator 40, the jet agitation fin 46, the straightening plate 35, the immersion type heater 38 and the like.

This stainless steel is schematically shown in a sectional view thereof shown in Fig. 6, in which a nitride-reformed layer 52 is formed on a surface of the stainless steel main body 50, and a passivation film 54 is formed on an outermost layer thereof. In the nitride-reformed layer 52, the chromium Cr stays in its solid solution state. The passivation film 54 formed on the outermost layer of the stainless steel 50 is a passivation film of chromium oxide, which will be described below. Since this passivation film is excellent in corrosion resistance, it functions as protective film against the lead-free solder. The thickness of the nitride-reformed layer 52 is about 5 to 15 µm, and the thickness of the passivation film 54 is about 10⁻⁸ cm.

The following will describe a method for manufacturing austenitic stainless steel related to the present invention.

### First Embodiment

SUS316 austenitic stainless steel is used as a sample. Chromium oxide layer formed on the surface of this sample is removed. In this embodiment, by high-speed injection of fine particles, the surface is activated for removing the chromium oxide layer, and then performed by nitriding.

As the treatment temperature as nitriding requirement, a relatively low temperature range is used. This low temperature range is a temperature range of about 380 to 430 °C. It takes about 15 to 25 hours as a period of the treating time.

In the first embodiment, by using a low temperature of 420 °C as the treatment temperature, the SUS316 stainless steel was treated by nitriding for 20 hours in ammonia gas (NH3) atmosphere. The grown film (nitride-reformed layer) after nitriding had a thickness of 15 µm.

It was confirmed that in the nitride-reformed layer 52, chromium Cr and nitrogen N existed as their solid solution states. In the nitride-reformed layer 52, since chromium Cr and nitrogen N are both in solid solution state, it is a state not containing Cr nitride (Cr nitride-free state).

The passivation film 54 formed on the surface of the nitride-reformed layer 52 is a film of chromium oxide having excellent corrosion resistance. The Cr nitride-free state in the nitride-reformed layer 52 seems to contribute to formation of passivation film.

It is considered that the nitride-reformed layer 52 has a thickness of about 5 to 15 µm, and the passivation film 54 has a thickness of about 10⁻⁸ cm.

The hardness of the nitride-reformed layer 52 is Vickers hardness (Hv) of about 800 up to the thickness from the stainless steel surface of about 15 µm (0.015 mm) as indicated by curve Lo in Fig. 5. This Vickers hardness is not so high as the Vickers hardness by vacuum nitriding (1100 to 1200 Hv), but seems to be a sufficient hardness to be used as the member contacting with melted solder 32 used in the automatic soldering apparatus 10 or the like.

It has been hitherto known that a chromium nitride layer (CrN as chromium nitride) is formed on the surface of stainless steel by vacuum nitriding in a relatively high temperature range (500 to 550 °C) and for a relatively long time (40 to 50 hours).

That is, chromium nitride layer is formed by nitriding of such high temperature and long time, but when performing by nitriding at low temperature and for a relatively short time as in the invention, instead of chromium nitride layer, nitride-reformed layer 52 having chromium Cr and nitrogen N respectively as their solid solution is formed.

This phenomenon relates to the step rule, that is, deposition of chromium nitride (deposits such as CrN, Cr₂N) different in stoichiometrical ratio by free energy sequence is balanced, by sequential deposition from those higher in free energy, terminating with deposition of the lowest (final stable phase).

In a low temperature region of 380 to 430 °C in heating temperature, free energy of Cr₂N is larger than that of CrN, but it is verified that Cr₂N is hard to deposit in this temperature range.

As a result, in this temperature range, being blocked by Cr₂N, CrN is also hard to deposit, and chromium nitride layer is not formed, and chromium Cr and nitrogen N are independently present as their solid solution, and it is expected that passivation film 54 of chromium oxide is formed by the chromium Cr existing as its solid solution.

Near 430 °C, that is, at less than 430 °C, free energy of Cr₂N and that of CrN are nearly balanced, but the free energy of Cr₂N seems to act slightly dominantly, and this relation seems to be clarified at about 420 °C. In a temperature range exceeding 430 °C, the free energy of CrN is higher than that of Cr₂N, and CrN deposits, and chromium nitride seems to be formed on the outermost surface of the stainless steel.

Therefore, the heating temperature is preferably 380 to 430 °C, mostly preferably around 420 °C. At lower than 380 °C, the reaction is slow, and at over 430 °C, evidently, the free energy of CrN is higher than the free energy of Cr₂N.

A period of the treating time is preferably 15 to 25 hours, and most preferably about 20 hours. If shorter than 15 hours, the treating time is not enough, or if longer than 25 hours, the nitride-reformed layer 52 is likely to peel off.

As mentioned above, since the nitride-reformed layer 52 in which the chromium Cr is in solid solution exists, corrosion resistance to lead-free solder is increased by the passivation film 54 of chromium oxide produced on the outermost surface thereof and thus, corrosion resistance as shown in line Le in Fig. 4 is obtained.

It should be noted that, in this case, the corrosion start time is about 500 hours, and the depth of corrosion is about 20 to 25 µm. As the corrosion start time is extended, it is expected, of course, that the service life is made longer. Duration of 10 years or longer is expected.

Thus, since the passivation film 54 including the nitride-reformed layer 52 formed on the surface of the stainless steel 50 functions as protective film against lead-free solder, the stainless steel 50 is less likely to be attacked by the lead-free solder, thereby improving its wear resistant characteristic and corrosion resistance.

### Second Embodiment

As a sample, SUS304 austenitic stainless steel is used. Nitriding treatment is performed after surface activation process has been performed similar to the first embodiment. The treatment temperature as nitriding requirement is a relatively low temperature range, about 380 to 430 °C, and a period of the treating time is about 15 to 25 hours.

In this second embodiment, by using a low temperature of 420 °C as the treatment temperature, the SUS304 was treated by nitriding for about 20 hours in ammonia gas (NH3) atmosphere.

By this nitriding, a relatively hard nitride-reformed layer 52 was formed on a surface of the stainless steel 50, and by reaction of chromium Cr in the nitride-reformed layer 52 with oxygen, a passivation film 54 was formed on the surface of the nitride-reformed layer 52. The nitride-reformed layer 52 has a thickness of about 5 to 15 µm, and the passivation film 54 is considered to have a thickness of about 10⁻⁸ cm. At this time, the hardness (Vickers hardness) is about 800 Hv as indicated by curve Lp in Fig. 5.

Similar to the first embodiment, by the presence of the nitride-reformed layer 52 with chromium Cr in solid solution state, the corrosion resistance to lead-free solder is improved by the passivation film 54 formed on the outermost layer thereof, so that the stainless steel in this second embodiment is also found to be suitable as the corrosion resistant members of the immersion type heater 38, the solder-melting tank 30 and the automatic soldering apparatus 10 having this solder-melting tank 30, similar to the SUS316 stainless steel in the first embodiment. The wear resistance thereof is improved as well as the corrosion resistance.

Therefore, by using the SUS304 austenitic stainless steel as the members contacting with the melted solder 32, the immersion type heater, solder-melting tank, and automatic soldering apparatus 10 of longer life can be presented.

Although, in these first and second embodiments, SUS316 stainless steel and SUS304 stainless steel have been shown as examples of austenitic stainless steel, the invention is not limited thereto and can be also applied to other austenitic stainless steel materials, so that it is easily understood that a solder-melting tank and an automatic soldering apparatus can be composed by using such other austenitic stainless steel materials. Objects of soldering are components to be mounted, and are hence not limited to components to be mounted on a printed circuit board.

### INDUSTRIAL APPLICABILITY

Austenitic stainless steel of the present invention is preferably applied to members for the solder-melting tank and the automatic soldering apparatus, which are always in contact with lead-free solder.

## Claims

1. A method for manufacturing an austenitic stainless steel **characterized by** including the following steps of:
performing nitriding on the austenitic stainless steel for use on member directly contacting with melted metal and melted alloy at a heating temperature to form a nitride-reformed layer and a passivation film on the surface of the austenitic stainless steel; and
forming a passivation film on an outermost surface of the stainless steel.

2. The method for manufacturing austenitic stainless steel of claim 1, wherein the nitride-reformed layer includes chromium and nitrogen as their solid solutions, but excludes chromium compound.

3. The method for manufacturing austenitic stainless steel of claim 1, wherein the passivation film is a chromium oxide film.

4. The method for manufacturing austenitic stainless steel of claim 1, wherein the nitride-reformed layer has the thickness of 5 to 15 µm.

5. The method for manufacturing austenitic stainless steel of claim 1, wherein the steel includes SUS316 stainless steel and SUS304 stainless steel.

6. The method for manufacturing austenitic stainless steel of claim 1, wherein the heating temperature is 380 to 430 °C, most preferably 420 °C.

7. The method for manufacturing austenitic stainless steel of claim 1, wherein a period of the nitriding time stays from 15 to 25 hours, most preferably 20 hours.

8. A solder-melting tank **characterized in that** the unit comprises a solder bath for melting and storing solder and an immersion type heater installed in the solder bath; and
that in the solder bath and the immersion type heater, respectively, austenitic stainless steel having a nitride-reformed layer and a passivation film is used on the surface thereof.

9. The solder-melting tank of claim 8, wherein in a duct with nozzle contained in the solder bath and installed in the melted solder, austenitic stainless steel having a nitride-reformed layer and a passivation film is used on the surface thereof.

10. The solder-melting tank of claim 8, wherein in a jet agitation shaft and a jet agitation fin of melted solder, which are installed in the solder bath, austenitic stainless steel having a nitride-reformed layer and a passivation film is used on the surface thereof.

11. The solder-melting tank of claim 8, wherein the nitride-reformed layer includes chromium and nitrogen as their solid solutions, but excludes chromium compound.

12. The solder-melting tank of claim 8, wherein the passivation film is a chromium oxide film.

13. An automatic soldering apparatus comprising a conveying belt and a solder-melting tank, **characterized in that** in the solder-melting tank, austenitic stainless steel having a nitride-reformed layer and a passivation film is used on the surface thereof.

14. The automatic soldering apparatus of claim 13, wherein the nitride-reformed layer includes chromium and nitrogen as their solid solutions, but excludes chromium compound.

15. The automatic soldering apparatus of claim 13, wherein the passivation film is a chromium oxide film.
